(19) **Europäisches Patentamt**

**European Patent Office**

**Office européen des brevets**

(11) **EP 1 285 107 B1**

(12) **EUROPÄISCHE PATENTSCHRIFT**

(45) Veröffentlichungstag und Bekanntmachung des Hinweises auf die Patenterteilung:
**25.08.2004 Patentblatt 2004/35**

(51) Int Cl.⁷: **D01D 5/06**, D01D 5/098, D01F 2/00

(21) Anmeldenummer: **01925549.6**

(22) Anmeldetag: **12.04.2001**

(86) Internationale Anmeldenummer:
**PCT/EP2001/004241**

(87) Internationale Veröffentlichungsnummer:
**WO 2001/090450 (29.11.2001 Gazette 2001/48)**

(54) **VERFAHREN ZUM EXTRUDIEREN EINES ENDLOSFORMKÖRPERS**

METHOD FOR EXTRUDING A CONTINUOUS SHAPED BODY

PROCEDE POUR EXTRUDER UN CORPS MOULE CONTINU

(84) Benannte Vertragsstaaten:
**AT BE CH CY DE DK ES FI FR GB GR IE IT LI LU MC NL PT SE TR**

(30) Priorität: **22.05.2000 DE 10025231**

(43) Veröffentlichungstag der Anmeldung:
**26.02.2003 Patentblatt 2003/09**

(73) Patentinhaber: **Zimmer Aktiengesellschaft 60388 Frankfurt am Main (DE)**

(72) Erfinder:
• **ZIKELI, Stefan A-4844 Regau (AT)**

• **ECKER, Friedrich A-4850 Timelkam (AT)**

(74) Vertreter: **Erk, Patrick P. Grünecker Kinkeldey Stockmair & Schwanhäusser, Maximilianstrasse 58 80538 München (DE)**

(56) Entgegenhaltungen:
**WO-A-97/24476      WO-A-98/26122 WO-A-99/47733**

**Beschreibung**

Die Erfindung betrifft ein Verfahren zum Extrudieren eines Endlosformkörpers aus einer Extrusionslösung, insbesondere einer Extrusionslösung enthaltend Cellulose, Wasser, tertiäres Aminoxid sowie Zusätze zur Stabilisierung der Spinnlösung bzw. Additive in Form von organischen oder anorganischen Zusätzen, wobei das Verfahren folgende Verfahrensschritte umfasst:

- Durchleiten der Extrusionslösung durch einen Extrusionskanal mit einer vorbestimmten Länge und einem vorbestimmten Durchmesser zu einer Extrusionskanalöffnung;

- Extrudieren der Extrusionslösung durch die Extrusionskanalöffnung zu einem extrudierten Endlosformkörper;

- Durchleiten des extrudierten Endlosformkörpers durch einen Luftspalt mit einer vorbestimmten Luftspalthöhe;

- Beschleunigen des Endlosformkörpers im Luftspalt.

Die durch das oben genannte Verfahren hergestellten Endlosformkörper können Fadenform, Filamentform oder Folienform aufweisen. Speziell bei der Herstellung eines Endlosformkörpers in Fadenform wird das oben bezeichnete Verfahren als Spinnverfahren zur Herstellung eines Spinnfadens verwendet.

Das oben beschriebene Verfahren ist beispielsweise aus der US-4,246,221 bekannt. In dieser Druckschrift ist die Herstellung von cellulosischen Formkörpern unter Verwendung von Spinndüsen als Extrusionskanalöffnungen beschrieben. Dabei wird ein Verfahren ausgeführt, bei dem der Spinnfaden nach dem Austritt aus der Spinndüse durch Luft geführt wird. In der Luft wird der Spinnfaden verstreckt. Das Verstrecken wird durch Aufbringen einer mechanischen Abzugskraft mittels eines nach der Spinnvorrichtung angeordneten Abzugsorgans erreicht.

In der AT-395863B ist ein weiteres Verfahren zur Herstellung eines cellulosischen Formkörpers beschrieben. Bei diesem Verfahren ist die Höhe des Luftspaltes kurz eingestellt. Die Durchmesser der Spinndüsenöffnungen betragen bei diesem Verfahren zwischen 70 und 150 Mikrometer, die Kanallänge der Spinndüsen beträgt zwischen 1000 und 1500 Mikrometer. Durch die Verkürzung des Luftspalts und die spezielle Düsenkonfiguration sollen die Titerschwankungen sowie die Fadenrisse und die Verklebung zwischen benachbarten Fäden verringert werden.

Nachteilig bei den aus dem Stand der Technik bekannten Verfahren zur Herstellung der Endlosformkörper ist, dass eine gezielte Einflussnahme auf die Eigenschaften der Endlosformkörper, speziell deren Fibrillierungsneigung und Schlingenfestigkeit nicht möglich ist.

Der Erfindung liegt daher die Aufgabe zugrunde, das bekannte Verfahren zum Extrudieren eines Endlosformkörpers aus einer Extrusionslösung so zu verbessern, dass die Schlingenfestigkeit verbessert und die Fibrillierungsneigung gesenkt wird.

Diese Aufgabe wird erfindungsgemäß für das eingangs genannte Verfahren dadurch gelöst, dass zusätzlich folgender Verfahrensschritt ausgeführt wird:

- Steuern der im Wesentlichen über die Luftspalthöhe gemittelten Beschleunigung $\bar{a}$ des Endlosformkörpers auf einen Wert

$$\bar{a} = \frac{10}{\delta \left[\dfrac{1}{\beta}\right]^{0.3}},$$

wobei β das Verhältnis von Länge zu Durchmesser des Extrusionskanals ist und der Wert des Steuerparameters δ mindestens 0,3 beträgt. Die Einheit der gemittelten Beschleunigung $\bar{a}$ ist m/s$^2$.

Durch diese einfache Maßnahme kann ein gutes Grundniveau bezüglich Schlingenfestigkeit sowie der Fibrillierungsneigung erreicht werden. Unter der im Wesentlichen über die Luftspalthöhe gemittelten Beschleunigung ist dabei eine Beschleunigung zu verstehen, die über einen wesentlichen Bereich derjenigen Strecke gemittelt ist, die der extrudierte Endlosformkörper durch den Luftspalt zurücklegt.

Die Werte für mechanische und textilphysikalische Eigenschaften des Endlosformkörpers lassen sich verbessern, wenn der Wert des Steuerparameters δ in einer weiteren vorteilhaften Ausgestaltung mindestens 0,6- beträgt.

Eine nochmalige Steigerung der textilen Eigenschaften des Endlosformkörpers ist überraschender Weise möglich, wenn der Steuerparameter δ in einer weiteren Ausgestaltung des Verfahrens mindestens 1,5 beträgt.

Die geringste Fibrillierungsneigung und die größte Schlingenfestigkeit wurden in einer Ausgestaltung des Verfahrens erreicht, bei der der Wert des Steuerparameters δ mindestens 2,2 beträgt.

Nach dem Luftspalt oder einem Koagulationsbad kann in einer vorteilhaften Weiterbildung des Verfahrens eine Fördereinrichtung angeordnet sein, die den Endlosformkörper im wesentlichen zugspannungsfrei zum Abzugswerk fördert. Auch die Fördergeschwindigkeit dieser Fördereinrichtung kann in Abhängigkeit von der mittleren Beschleunigung $\bar{a}$ gesteuert werden.

In einer weiteren vorteilhaften Ausgestaltung kann bei dem erfindungsgemäßen Verfahren der extrudierte Endlosformkörper nach der Durchquerung des Luftspalts durch ein Abzugswerk abgezogen werden. Durch das Abzugswerk wird der extrudierte Endlosformkörper unter Aufbringung einer Zugspannung weiteren Bearbeitungsschritten zugeführt.

Wird ein Abzugswerk verwendet, so lässt sich in einer vorteilhaften Weiterbildung des erfindungsgemäßen Verfahrens die Schlingenfestigkeit verbessern und die Fibrillierungsneigung verringern, wenn die Extrusionsgeschwindigkeit $v_E$ des Endlosformkörpers, mit der er aus der Extrusionskanalöffnung austritt, und/oder die Abzugsgeschwindigkeit $v_A$, mit der der Endlosformkörper durch das Abzugswerk abgezogen wird, in Abhängigkeit von der Beschleunigung $\bar{a}$ gesteuert wird.

Die Steuerung der Extrusionsgeschwindigkeit und/oder der Abzugsgeschwindigkeit kann insbesondere nach folgender Formel erfolgen:

$$v_A^2 - v_E^2 = \gamma \cdot H \cdot \bar{a}$$

wobei H die Luftspalthöhe und $\gamma$ ein Korrekturfaktor mit einem Wert zwischen 7 und 7,4, vorzugsweise um 7,2 ist. Die Einheiten sind für $v_A$ und $v_E$ m/min, für H mm, und für $\bar{a}$ m/s$^2$.

Wird der Endlosformkörper im Luftspalt durch im wesentlichen parallel zur Extrusionsrichtung des Endlosformkörpers strömende Luft von höherer Geschwindigkeit als die Extrusionsgeschwindigkeit verstreckt, so kann die Beschleunigung $\bar{a}$ im Luftspalt auch durch Steuerung der Geschwindigkeit der Luft eingestellt werden.

Die Beschleunigung $\bar{a}$ kann durch Steuerung einer beliebigen Kombination der Extrusionsgeschwindigkeit, der Abzugsgeschwindigkeit, der Fördergeschwindigkeit der Fördereinrichtung und der Strömungsgeschwindigkeit der Luft gesteuert werden.

Der Kennwert $\beta$, der das Verhältnis der Länge des Extrusionskanals zu seinem Durchmesser bezeichnet, kann mindestens 2 betragen. Besonders gute Werte für die Schlingenfestigkeit und die Fibrillierungsneigung sind dann möglich, wenn der Wert von $\beta$ höchstens 150 beträgt. Die mechanischen Eigenschaften lassen sich dabei verbessern, wenn der Wert von $\beta$ höchstens 100 beträgt.

Zur Stabilisierung des Endlosformkörpers nach der Extrusion und nach der Beschleunigung, d.h. der Verstreckung, kann der Endlosformkörper nach Durchquerung des Luftspalts durch ein Koagulationsbad befeuchtet werden. Die Befeuchtung kann insbesondere dadurch vorgenommen werden, dass der Endlosformkörper durch eine Befeuchtungsvorrichtung besprüht wird oder in ein Koagulationsbad eintaucht.

Das eingangs genannte Verfahren kann weiter dadurch verbessert werden, dass zusätzlich folgender Verfahrensschritt ausgeführt wird:

- Steuern der im wesentlichen über die Luftspalthöhe gemittelten Wärmestromdichte auf einen Wert

$$Q = \frac{0,004}{\alpha \cdot \left[\dfrac{1}{\beta}\right]^{0,3}} \, ,$$

wobei $\beta$ das Verhältnis von Länge zu Durchmesser des Extrusionskanals ist und der Wert des Steuerparameters $\alpha$ mindestens 0,1 beträgt und sich der Wert Q in W/mm$^3$ errechnet.

Durch diese einfache zusätzliche Maßnahme kann ebenfalls ein gutes Grundniveau bezüglich Schlingenfestigkeit sowie der Fibrillierungsneigung erreicht werden. Unter der im Wesentlichen über die Luftspalthöhe gemittelten Beschleunigung ist dabei eine Beschleunigung zu verstehen, die über einen wesentlichen Bereich derjenigen Strecke gemittelt ist, die der extrudierte Endlosformkörper durch den Luftspalt zurücklegt.

Die mechanischen Eigenschaften des Endlosformkörpers lassen sich verbessern, wenn der Wert des Steuerparameters $\alpha$ in einer weiteren vorteilhaften Ausgestaltung mindestens 0,2 beträgt.

Eine nochmalige Steigerung der textilen Eigenschaften des Endlosformkörpers ist überraschender Weise möglich, wenn der Steuerparameter $\alpha$ in einer weiteren Ausgestaltung des Verfahrens mindestens 0,5 beträgt.

Die geringste Fibrillierungsneigung und die größte Schlingenfestigkeit wurden in einer Ausgestaltung des Verfahrens erreicht, bei der der Wert des Steuerparameters $\alpha$ mindestens 1,0 beträgt.

Um die Wärmestromdichte im Luftspalt zu steuern, kann die Temperatur des Endlosformkörpers, die Temperatur der den Endlosformkörper im Luftspalt umgebenden Luft oder eine Strömungsgeschwindigkeit dieser Luft verändert werden. Die Wärmestromdichte im Luftspalt steigt mit sinkender Lufttemperatur und mit erhöhter Luftgeschwindigkeit sowie mit steigender Temperatur des Endlosformkörpers. Dabei ist zu beachten, dass mit der Einstellung der Luftgeschwindigkeit auch der Grad der Verstreckung beeinflusst wird.

In einer weiteren vorteilhaften Ausgestaltung des Verfahrens kann die Wärmestromdichte Q im Luftspalt insbesondere durch folgende Maßnahme eingestellt werden:

- Steuern einer Temperaturdifferenz $\Delta T = T_E - T_L$ zwischen der Temperatur $T_E$ der Extrusionslösung und der Temperatur $T_L$ der Luft auf einen Wert:

$$\Delta T = \frac{H}{d} \cdot \frac{0{,}004}{\dot{m} \cdot c_E \cdot \alpha \cdot \left[\dfrac{1}{\beta}\right]^{0,3}},$$

wobei $\dot{m}$ der Massenstrom der Extrusionslösung durch die Extrusionskanalöffnung in g/s, $c_E$ die spezifische Wärmekapazität der Extrusionslösung in J/gK, d die Lochdichte der an der Düsenplatte angebrachten Bohrungen in Loch/mm² und H die Länge des Luftspaltes in mm ist.

Bei dieser Art der Steuerung können entweder die Temperatur $T_E$ des Extrudates oder die Temperatur $T_L$ der im Luftspalt zugeführten Luft, oder beide Größen gleichzeitig kontrolliert und eingestellt werden.

Darüber hinaus können auch alle anderen in der Formelbeziehung angeführten Faktoren für die Steuerung des Spinnprozesses verwendet werden.

Die spezifische Wärmekapazität $c_E$ der Extrusionslösung kann vorteilhaft mindestens 2,1 J/(g K), höchstens 2,9 J/(g K) betragen.

Das Verfahren kann in einer weiteren Ausgestaltung zusätzlich den folgenden Verfahrensschritt enthalten:

- Verstrecken des extrudierten Endlosformkörpers nach seinem Austritt aus der Extrusionskanalöffnung im Luftspalt durch eine Luftströmung in Extrusionsrichtung um den extrudierten Endlosformkörper, wobei die Strömungsgeschwindigkeit der Luft größer als die Extrusionsgeschwindigkeit des Endlosformkörpers ist.

In diesem Schritt werden die Polymer-Moleküle des Endlosformkörpers durch den Verstreckungsvorgang ausgerichtet. Durch die Luftströmung wird die für die Verstreckung notwendig Zugkraft schonend von der Mantelfläche des Endlosformkörpers her aufgebracht. Gleichzeitig kühlt die Luftströmung den Endlosformkörper, indem sie Wärme abführt.

Wird der Endlosformkörper im Luftspalt durch im wesentlichen parallel zur Extrusionsrichtung des Endlosformkörpers strömende Luft von höherer Geschwindigkeit als die Extrusionsgeschwindigkeit verstreckt, so kann die Beschleunigung $\bar{a}$ im Luftspalt auch durch Steuerung der Geschwindigkeit der Luft eingestellt werden.

Im Folgenden wird das erfindungsgemäße Verfahren mit Hilfe eines Ausführungsbeispiels mit Bezug auf die beigefügte Zeichnung beschrieben.

Es zeigen:

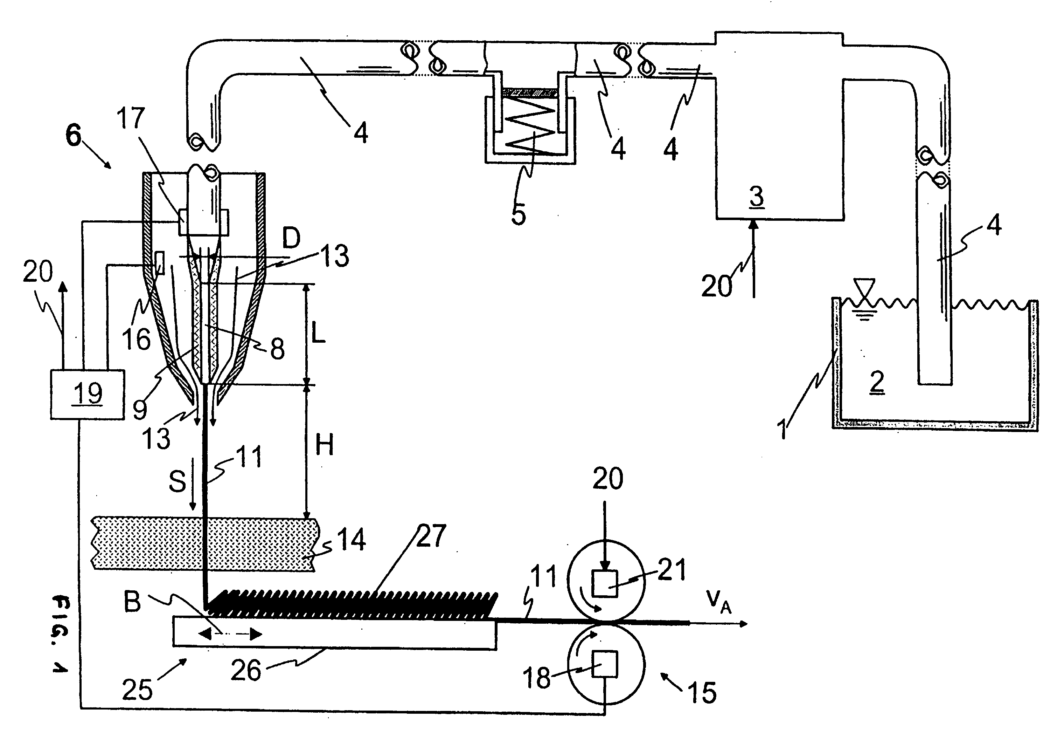

Fig. 1      eine Vorrichtung zur Durchführung des erfindungsgemäßen Verfahrens.

Zunächst wird der Ablauf des erfindungsgemäßen Verfahrens anhand der Fig. 1 beschrieben.

In einem Reaktionsbehälter 1 wird eine Extrusionslösung 2 zubereitet. Die Eictrusionslösung enthält Cellulose, Wasser und tertiäres Aminoxid, beispielsweise N-Methylmorpholin N-Oxid (NMMO) sowie gegebenenfalls Stabilisatoren zur thermischen Stabilisierung der Cellulose und des Lösungsmittels. Stabilisatoren können zum Beispiel sein: Propylgallat, alkalisch wirkende Medien oder Mischungen untereinander. Gegebenenfalls können weitere Additive enthalten sein, wie beispielsweise Titandioxid, Bariumsulfat, Graphit, Carboxymethylcellulosen, Polyethylenglykole, Chitin, Chitosan, Alginsäure, Polysaccharide, Farbstoffe, antibakteriell wirkende Chemikalien, Flammschutzmittel enthaltend Phosphor, Halogene oder Stickstoff, Aktivkohle, Ruße oder elektrisch leitfähige Ruße, Kieselsäure sowie organische Lösungsmittel als Verdünnungsmittel usw.

Über eine Pumpe 3 wird die Extrusionslösung 2 durch ein Leitungssystem 4 gefördert.

Im Leitungssystem 4 ist ein Druckausgleichsbehälter 5 angeordnet, der Druck- und/oder Volumenstromschwankungen im Leitungssystem 4 ausgleicht, so dass ein Extrusionskopf 6 kontinuierlich und gleichmäßig mit der Extrusionslösung 2 versorgt werden kann.

Das Leitungssystem 4 ist mit Temperierungseinrichtungen (nicht gezeigt) versehen, durch die die Temperatur der Extrusionslösung 2 genau gesteuert werden kann. Dies ist notwendig, da die chemischen und mechanischen Eigenschaften der Extrusionslösung stark temperaturabhängig sind. So sinkt die Viskosität der Extrusionslösung 2 mit steigender Temperatur und mit steigender Scherrate.

Im Leitungssystem 4 sind des Weiteren Berstschutzeinrichtungen vorgesehen, die aufgrund der Neigung der Extrusionslösung zu einer spontanen exothermen Reaktion notwendig sind. Durch die Berstschutzeinrichtungen werden Beschädigungen am Leitungssystem 4 und am Druckausgleichsbehälter 5 und im nachgeschalteten Extrusionskopf 6 vermieden.

Eine spontane exotherme Reaktion in der Extrusionslösung 2 tritt bei Überschreiten einer bestimmten Temperatur sowie bei einer Alterung der Extrusionslösung 2 vorzugsweise in Totwassergebieten auf. Um Letzteres zu vermeiden, ist das Leitungssystem 4 in dem von der hochviskosen Extrusionslösung 2 durchströmten Bereich strömungsgünstig ausgebildet.

Im Extrusionskopf 6 wird die Extrusionslösung in einem Düsenraum 7 auf eine Vielzahl von Extrusionskanälen 8 in Form von Spinnkapillaren verteilt. Die Spinnkapillaren 8 sind in Reihe, in Fig. 1 senkrecht zur Zeichenebene, angeordnet. Somit wird durch einen Extrusionskopf 6 gleichzeitig eine Vielzahl von Endlosformkörpern hergestellt. Es kann auch eine Vielzahl von Extrusionsköpfen 6 vorgesehen sein, so dass mehrere Reihen an Spinnkapillaren vorhanden sind.

Die Spinnkapillare weist einen Innendurchmesser D, von weniger als 500 Mikrometer, vorzugsweise weniger als 250 Mikrometer auf. Für Spezialanwendungen kann der Durchmesser auch weniger als 100 Mikrometer, vorzugsweise um die 50 bis 70 Mikrometer betragen.

Die von der Extrusionslösung durchströmte Länge L der Spinnkapillare beträgt mindestens das Doppelte, höchstens jedoch das 100- bis 150-fache des Innendurchmessers D.

Die Spinnkapillare 8 ist zumindest abschnittsweise von einer Heizeinrichtung 9 umgeben, durch die die Wandtemperatur der Spinnkapillare 8 steuerbar ist. Die Wandtemperatur der Spinnkapillare 8 beträgt um die 150°C. Die Temperatur der Spinnlösung etwa 100°C. Die Spinnkapillaren 8 können in beliebiger Form auch in einem Trägerkörper, welcher von außen temperiert wird, angebracht sein, sodass sich hohe Lochdichten ergeben.

Die Heizeinrichtung 9 erstreckt sich vorzugsweise bis zu der in durch Strömungsrichtung S gelegenen Austrittsöffnung 10 des Extrusionskanals. Dadurch wird die Wand des Extrusionskanals 8 bis hin zur Extrusionskanalöffnung 10 beheizt.

Durch die Beheizung des Extrusionskanals bildet sich an dessen Innenwand aufgrund der temperaturabhängigen Viskosität der Extrusionslösung eine gegenüber der Kernströmung niedrigviskose, erwärmte Filmströmung aus. Dadurch werden das Geschwindigkeitsprofil der Extrusionslösung innerhalb des Extrusionskanals 8 und der Extrusionsvorgang positiv so verändert, dass eine verbesserte Schlingenfestigkeit und eine verringerte Fibrillierungsneigung gegenüber der Stand der Technik erreicht wird.

Im Extrusionskanal 8 wird die Extrusionslösung extrudiert und tritt danach in Form eines Spinnfadens 11 in einen Luftspalt 12 aus. Der Luftspalt 12 weist in Strömungsrichtung S der Extrusionslösung eine Höhe H auf.

Koaxial zur Extrusionslösung wird im Extrusionskopf 6 Luft 13 mit hoher Geschwindigkeit entlang des Endlosformkörpers 11 geleitet. Die Strömungsgeschwindigkeit der Luft 13 kann größer sein als die Extrusionsgeschwindigkeit $v_E$ des Spinnfadens, mit der der Endtosformkörper aus der Extrusionskanalöffnung 10 austritt. Dadurch wirkt an der Grenzfläche zwischen Endlosformkörper 11 und Luft 13 eine Zugspannung, durch die der Endlosformkörper 11 auch verstreckt werden.

Nach Durchquerung des Luftspaltes 12 tritt der Endlosformkörper in eine Koagulationsbadzone 14, in der er mit einer Koagulationslösung befeuchtet wird. Die Befeuchtung kann entweder mittels einer Sprüh- oder Benetzungsvorrichtung (nicht gezeigt) geschehen. Alternativ kann der Endlosformkörper 11 auch in ein Koagulationsbad eintauchen. Durch die Koagulationslösung wird die Extrusionslösung stabilisiert.

Nach der Koagulationsbadzone 14 wird der Endlosformkörper 11 durch ein Abzugswerk 15 mit einer Abzugsgeschwindigkeit $v_A$ abgezogen und weiteren Bearbeitungsschritten zugeführt, die hier nicht dargestellt sind. Zwischen Koagulationsbadzone 14 und Abzugswerk 15 können verschiedene weitere Bearbeitungseinrichtungen vorgesehen sein. Beispielsweise kann der Endlosformkörper 11 gewaschen und gepresst werden.

Die Extrusionslösung wurde für die Extrusion auf eine Temperatur gebracht, in der sie zähflüssig ist und somit formstabil durch den Extrusionskanal 8 und die Extrusionskanalöffnung 10 extrudiert werden kann. Nach der Extrusion, im Luftspalt 12, muss der Endlosformkörper abgekühlt werden. Dazu muss ein vom Endlosformkörper 11 in den Luftspalt 12 gerichteter Wärmestrom aufgebaut werden.

Die mechanischen Eigenschaften des Endlosformkörpers 11 hängen entscheidend von den Verfahrensschritten unmittelbar vor oder nach der Extrusion ab.

So kann die Schlingenfestigkeit des Endlosformkörpers verbessert und die Fibrillierungsneigung verringert werden, wenn die Wärmestromdichte Q im Luftspalt auf einen Wert

$$Q = \frac{0{,}004}{\alpha \cdot \left[\dfrac{1}{\beta}\right]^{0{,}3}}$$

gesteuert wird, wobei β das Verhältnis von Länge L zum Durchmesser D des Extrusionskanals 8 ist und der Wert des Steuerparameters α mindestens 0,1 beträgt.

Die Kenngröße β=L/D kann Werte zwischen 2 und 150, bevorzugt im Bereich zwischen 50 und 100 annehmen.

In der obigen Formel stellt α einen Steuerparameter dar, dessen Wert mindestens 0,1 beträgt. In einer weiteren Variante kann der Wert des Steuerparameters α mindestens 0,2 betragen. Bevorzugt beträgt das Steuerparameter α mindestens 0,5, besonders bevorzugt mindestens 1.

Die Wärmestromdichte Q stellt dabei einen im wesentlichen über die Höhe H des Luftspaltes 12 gemittelten Wert des Wärmestroms in W/mm³ pro Volumeneinheit des Luftspaltraumes dar. Die Wärmestromdichte ist die durch die Spinnlösung in den das Filament unmittelbar umgebenden Luftspaltraum eingetragene Wärmemenge. Der Luftspaltraum ist jeweils einer Extrusionskanalöffnung 10 zugeordnet und wird gebildet durch ein Bilanzvolumen V, das den Endlosformkörper 11 im Luftspalt 12 umgibt. Im Luftspaltraum V wird der durch den Endlosformkörper 11 eingebrachte Wärmestrom mit der aus dem Luftspaltraum austretenden Wärme bilanziert. In dieser Wärmebilanz sind als negative Wärmeströme die vom aus dem Bilanzvolumen austretenden Endlosformkörper und die von der stehenden oder bewegten Luft 13, die den Endlosformkörper 11 im Luftspalt 12 umgibt, abgeleitete Wärme sowie die abgestrahlte Wärme zu, berücksichtigen.

Bei Extrusions- oder Spinnköpfen 6 mit einer Vielzahl von benachbarten Extrusionskanälen 8 grenzen die Bilanzvolumen der einzelnen Extrusionskanäle 8 aneinander, sodass sich die Wärmeströme der einzelnen Endlosformkörper 11 gegenseitig beeinflussen. Der gegenseitige Einfluss der nahe nebeneinander liegenden Endlosformkörper wird bei der erfindungsgemäßen Verfahrenssteuerung berücksichtigt.

Die Wärmestromdichte Q wird im wesentlichen durch die Lufttemperatur sowie durch die Temperatur des Endlosformkörpers und der durch den Endlosformkörper eingetragenen Wärmemenge bestimmt. Beim Ausführungsbeispiel wird daher die Temperaturdifferenz $\Delta T=T_E-T_L$ zwischen der Temperatur $T_E$ der Extrusionslösung und der Temperatur $T_L$ der Luft auf einen Wert:

$$\Delta T = \frac{H}{d} \cdot \frac{0{,}004}{\dot{m} \cdot c_E \cdot \alpha \cdot \left[\dfrac{1}{\beta}\right]^{0{,}3}}$$

eingestellt, wobei $\dot{m}$ der Massendurchsatz der Extrusionslösung durch die Extrusionskanalöffnung in g/s, $c_E$ die spezifische Wärmekapazität der Extrusionslösung in J/gK, d die Lochdichte der Extrusionskanalöffnungen pro Flächeneinheit in Loch/mm$^2$ und H die Länge des Luftspaltes 12 in mm ist.

Dabei kann entweder die Temperatur $T_E$ des Endlosformkörpers 11 oder die Temperatur $T_L$ der Luft 13 oder auch beide Temperaturen gleichzeitig gesteuert werden.

Darüber hinaus können auch alle anderen in der Formelbeziehung angeführten Faktoren für die Steuerung des Spinnprozesses verwendet werden.

Zusätzlich zur Wärmestromdichte oder auch anstelle der Wärmestromdichte kann die mittlere Beschleunigung $\bar{a}$ des Endlosformkörpers in m/s$^2$ 11 im Luftspalt 12 so eingestellt werden, dass sie folgenden Wert hat:

$$\bar{a} = \frac{10}{\delta\left[\dfrac{1}{\beta}\right]^{0{,}3}}.$$

wobei $\beta$ das Verhältnis der Länge zum Durchmesser (L/D) des Extrusionskanals 8 ist.

Die Größe $\delta$ stellt einen Steuerparameter dar, dessen Wert mindestens 0,3 beträgt. In einer weiteren Variante kann der Wert des Steuerparameters $\delta$ mindestens 0,6 betragen. Bevorzugt beträgt der Steuerparameter $\delta$ mindestens 1,5, besonders bevorzugt mindestens 2,2.

Die mittlere Beschleunigung des Endlosformkörpers 11 im Luftspalt 12 ist die über einen wesentlichen Teil der Luftspalthöhe H gemittelte Beschleunigung.

Die Beschleunigung a kann durch Änderung der Strömungsgeschwindigkeit der Luft 13. durch Änderung der Extrusionsgeschwindigkeit $v_E$ der Extrusionslösung 2 an der Extrusionskanalöffnung 10 oder durch Änderung der Abzugsgeschwindigkeit $v_A$ des Abzugswerks 15 eingestellt werden. Dabei sind auch beliebige Kombinationen der Einstellungen dieser Geschwindigkeiten möglich.

Zur Erfassung der Strömungsgeschwindigkeit der Luft 13 kann ein Sensor 16 vorgesehen sein. Ebenso können zur Erfassung der Extrusionsgeschwindigkeit $v_E$ ein Sensor 17 und zur Erfassung der Abzugsgeschwindigkeit $v_A$ ein Sensor 18 vorgesehen sein. Die Sensoren 16, 17, 18 geben Signale aus, die jeweils repräsentativ für die von ihnen gemessenen Geschwindigkeiten sind. Diese Signale werden in elektrischer Form einer Steuerungseinrichtung 19 zugeführt, die diese Signale verarbeitet und ein Steuersignal 20 ausgibt. Dieses Steuersignal 20 kann an die Pumpe 3 geleitet werden, um die Extrusionsgeschwindigkeit $v_E$ der dem Extrusionskopf 6 zugeführte Spinnmasse einzustellen. Der Sensor 17 kann auch in Kombination mit einer im Extrusionskopf 6 integrierten Präzisionsspinnpumpe (nicht gezeigt) verwendet werden. Das Steuersignal 20 kann aber auch einen Motor 21 zum Antrieb des Abzugswerkes 15 zugeführt werden, um die Abzugsgeschwindigkeit $v_A$ einzustellen. Schließlich kann das Steuersignal 20 auch einer Einrichtung (nicht gezeigt) zur Zufuhr der Luft 13 zugeführt werden, um die Geschwindigkeit der Luft 13 einzustellen. Auf diese Weise kann ein Regelkreis zur rückgekoppelten Steuerung der Beschleunigung $\bar{a}$ aufgebaut werden.

Die Extrusionsgeschwindigkeit $v_E$ kann unabhängig oder zusammen mit der Abzugsgeschwindigkeit $v_A$ gesteuert werden. Beim Ausführungsbeispiel der Fig. 1 kann zwischen einer Steuerung nur der Extrusionsgeschwindigkeit $v_E$, nur der Abzugsgeschwindigkeit $v_A$ und einer kombinierten Steuerung beider Geschwindigkeiten so umgestaltet werden, dass die folgende Formel erfüllt ist:

$$v_A^2 - v_E^2 = \gamma \cdot H \cdot \bar{a}.$$

wobei H die Luftspalthöhe und $\gamma$ ein Korrekturfaktor mit einem Wert zwischen 7 und 7,4 ist. Insbesondere kann der Wert des Korrekturfaktors um 7,2 betragen.

Im Ausführungsbeispiel ist zwischen dem Luftspalt 12 bzw. der Koagulationsbadzone 14 und dem Abzugswerk 15 eine weitere Fördereinrichtung 25 dargestellt. Diese optionale Fördereinrichtung 25 fördert den Endlosformkörper im wesentlichen zugspannungsfrei zum Abzugswerk 15.

Hierzu kann eine Fördereinrichtung in Form eines Schüttel- oder Vibrationsförderers 25 verwendet werden, bei dem der Endlosformkörper 11 durch hin- und hergehende Bewegungen B einer Auflage- und Transportfläche 26 schonend gefördert wird.

Die Fördergeschwindigkeit der Fördereinrichtung 25 ist wesentlich kleiner als die Extrusionsgeschwindigkeit $v_E$ oder die Abzugsgeschwindigkeit $v_A$, die in etwa gleich sind. Folglich wirkt die Fördereinrichtung 25 als ein Puffer, auf dem der Endlosformkörper 11 in geometrisch geordneter Form 27 gestapelt abgelegt wird, bevor er wieder durch das Abzugswerk 15 abgezogen wird. Über entsprechende Sensoren (nicht gezeigt) kann auch die Fördergeschwindigkeit der Fördereinrichtung 25 in Abhängigkeit von der mittleren Beschleunigung $\bar{a}$ im Luftspalt gesteuert werden.

Durch die zugspannungsfreie Förderung des Endlosformkörpers 11 in diesem Bereich, in dem er sich nach der Extrusion stabilisiert, wird eine nochmalige Steigerung der Schlingenfestigkeit und eine erheblich verringerte Fibrillierungsneigung erhalten.

**Patentansprüche**

1. Verfahren zum Extrudieren eines Endlosformkörpers aus einer Extrusionslösung, insbesondere einer Extrusionslösung enthaltend Cellulose, Wasser und tertiäres Aminoxid, umfassend folgende Verfahrensschritte:

   - Durchleiten der Extrusionslösung durch einen Extrusionskanal mit einer vorbestimmten Länge und einem vorbestimmten Durchmesser zu einer Extrusionskanalöffnung;
   - Extrudieren der Extrusionslösung durch die Extrusionskanalöffnung zu einem extrudierten Endlosformkörper;
   - Durchleiten des extrudierten Endlosformkörpers durch einen Luftspalt mit einer vorbestimmten Luftspalthöhe;
   - Beschleunigen des Endlosformkörpers im Luftspalt;

   **gekennzeichnet durch** folgenden Verfahrensschritt:

   - Steuern der im wesentlichen über die Luftspalthöhe (H) gemittelten Beschleunigung des Endlosformkörpers (11) auf einen Wert

$$\bar{a} = \frac{10}{\delta \left[ \dfrac{1}{\beta} \right]^{0,3}},$$

   wobei $\beta$ das Verhältnis von Länge (L) zu Durchmesser (D) des Extrusionskanals (8) ist und der Wert des Steuerparameters $\delta$ mindestens 0,3 beträgt.

2. Verfahren nach Anspruch 1, **dadurch gekennzeichnet, dass** der Wert des Steuerparameters $\delta$ mindestens 0,6 beträgt.

3. Verfahren nach Anspruch 2, **dadurch gekennzeichnet, dass** der Wert des Steuerparameters $\delta$ mindestens 1,5 beträgt.

4. Verfahren nach Anspruch 3, **dadurch gekennzeichnet, dass** der Wert des Steuerparameters $\delta$ mindestens 2,2 beträgt.

5. Verfahren nach einem der oben genannten Ansprüche, **gekennzeichnet durch** folgenden Verfahrensschritt:

   - Steuern der Extrusionsgeschwindigkeit $v_E$ des Endlosformkörpers (11) **durch** die Extrusionskanalöffnung (10) in Abhängigkeit von der mittleren Beschleunigung $\bar{a}$.

6. Verfahren nach einem der oben genannten Ansprüche, **gekennzeichnet durch** folgenden Verfahrensschritt:

   - Im wesentliches zugspannungsfreies Fördern des extrudierten Endlosformkörpers (11) auf einer nach dem Luftspalt (12) oder einer Koagulationsbadzone (14) angeordneten Fördereinrichtung (20) zu einem Abzugswerk (15).

7. Verfahren nach Anspruch 6, **gekennzeichnet durch** folgenden Verfahrensschritt:

   - Steuern der Fördergeschwindigkeit der Fördereinrichtung (20) in Abhängigkeit von der mittleren Beschleunigung $\bar{a}$.

8. Verfahren nach einem der oben genannten Ansprüche, **gekennzeichnet durch** folgenden Verfahrensschritt:

   - Abziehen des extrudierten Endlosformkörpers (11) nach der Durchquerung des Luftspaltes (12) **durch** ein Abzugswerk (15) mit einer Abzugsgeschwindigkeit $v_A$.

**9.** Verfahren nach Anspruch 8, **gekennzeichnet durch** folgenden Verfahrensschritt:

- Steuern der Abzugsgeschwindigkeit $v_A$ des Abzugswerks (15) in Abhängigkeit von der mittleren Beschleunigung $\bar{a}$.

**10.** Verfahren nach einem der oben genannten Ansprüche, **gekennzeichnet durch** folgenden Verfahrensschritt:

- Steuern der Extrusionsgeschwindigkeit $v_E$ des Endlosformkörpers (11) **durch** die Extrusionskanalöffnung (10) und/oder der Abzugsgeschwindigkeit $v_A$ des Endlosformkörpers (11) **durch** das Abzugswerk (15) nach folgender Formel:

$$v_A^2 - v_E^2 = \gamma \cdot H \cdot \bar{a},$$

wobei H die Luftspalthöhe und y ein Korrekturfaktor mit einem Wert zwischen 7 und 7,4 ist.

**11.** Verfahren nach Anspruch 10, **dadurch gekennzeichnet, dass** der Wert des Korrekturfaktors $\gamma$ um 7.2 beträgt.

**12.** Verfahren nach einem der oben genannten Ansprüche, **gekennzeichnet durch** folgenden Verfahrensschritt:

- Verstrecken des extrudierten Endlosformkörpers nach seinem Austritt aus der Extrusionskanalöffnung im Luftspalt (12) **durch** eine Luftströmung in Extrusionsrichtung um den extrudierten Endlosformkörper, wobei die Strömungsgeschwindigkeit der Luft (13) größer als die Extrusionsgeschwindigkeit des Endlosformkörpers (11 ) ist.

**13.** Verfahren, nach Anspruch 12, **gekennzeichnet durch** folgenden Verfahrensschritt:

- Steuerung der Geschwindigkeit der Luft (13) in Abhängigkeit von der mittleren Beschleunigung $\bar{a}$ im Luftspalt.

**14.** Verfahren nach einem der oben genannten Ansprüche, **gekennzeichnet durch** folgenden Verfahrensschritt:

- Steuern der im wesentlichen über die Luftspalthöhe gemittelten Wärmestromdichte Q auf einen Wert

$$Q = \frac{0,004}{\alpha \cdot \left[\frac{1}{\beta}\right]^{0,3}},$$

wobei $\beta$ das Verhältnis von Länge zu Durchmesser des Extrusionskanals ist und der Wert des Steuerparameters $\alpha$ mindestens 0,1 beträgt.

**15.** Verfahren nach Anspruch 14, **dadurch gekennzeichnet, dass** der Wert des Steuerparameters $\alpha$ mindestens 0,2 beträgt.

**16.** Verfahren nach Anspruch 15, **dadurch gekennzeichnet, dass** der Wert des Steuerparameters $\alpha$ mindestens 0,5 beträgt.

**17.** Verfahren nach Anspruch 16, **dadurch gekennzeichnet, dass** der Wert des Steuerparameters $\alpha$ mindestens 1,0 beträgt.

**18.** Verfahren nach einem der Ansprüche 14 bis 17, **gekennzeichnet durch** folgenden Verfahrensschritt:

- Steuern der Temperatur $T_E$ der Extrusionslösung in Abhängigkeit von der Wärmestromdichte Q.

**19.** Verfahren nach einem Ansprüche 14 bis 18, **gekennzeichnet durch** folgenden Verfahrensschritt:

- Steuern der Temperatur $T_L$ der den Endlosformkörper (11) im Luftspalt (12) umgebenden Luft in Abhängigkeit von der Wärmestromdichte Q.

**20.** Verfahren nach einem der oben genannten Ansprüche, **gekennzeichnet durch** folgenden Verfahrensschritt:

- Steuern einer Temperaturdifferenz $\Delta T = T_E - T_L$ zwischen der Temperatur $T_E$ der Extrusionslösung und der Temperatur $T_L$ der den Endlosformkörper (11) im Luftspalt (12) umgebenden Luft auf einen Wert:

$$\Delta T = \frac{H}{d} \cdot \frac{0,004}{\dot{m} \cdot c_E \cdot \alpha \cdot \left[\frac{1}{\beta}\right]^{0,3}},$$

wobei $\dot{m}$ der Massendurchsatz der Extrusionslösung **durch** die Extrusionskanalöffnung in g/s, $c_E$ die spezifische Wärmekapazität der Extrusi-

onslösung in W/mm$^3$, d

die Lochdichte der an der Düsenplatte angebrachten Bohrungen in Loch/mm$^2$ und H die Länge des Luftspaltes in mm ist.

21. Verfahren nach einem der Ansprüche 14 bis 20, **dadurch gekennzeichnet, dass** die Temperatur $T_L$ bei im wesentlichen konstant gehaltener Temperatur $T_E$ gesteuert wird.

22. Verfahren nach einem der Ansprüche 14 bis 20, **dadurch gekennzeichnet, dass** die Temperatur $T_E$ bei im wesentlichen konstant gehaltener Temperatur $T_L$ gesteuert wird.

23. Verfahren nach einem der oben genannten Ansprüche, **dadurch gekennzeichnet, dass** der Wert $\beta$ mindestens 2 beträgt.

24. Verfahren nach Anspruch 21, **dadurch gekennzeichnet, dass** der Wert $\beta$ höchstens 150 beträgt.

25. Verfahren nach Anspruch 22, **dadurch gekennzeichnet, dass** der Wert $\beta$ höchstens 100 beträgt.

26. Verfahren nach einem der oben genannten Ansprüche, **dadurch gekennzeichnet, dass** die spezifische Wärmekapazität $c_E$ der Extrusionslösung mindestens 2,1 J/(g K) beträgt.

27. Verfahren nach einem der oben genannten Ansprüche, **dadurch gekennzeichnet, dass** die spezifische Wärmekapazität $c_E$ der Extrusionslösung höchstens 2,9 J/(g K) beträgt.

**Claims**

1. A method of extruding a continuous moulding from an extrusion solution, in particular an extrusion solution containing cellulose, water and a tertiary amine oxide, said method comprising the following steps:

   - conducting the extrusion solution through an extrusion channel having a predetermined length and a predetermined diameter up to an extrusion-channel opening;
   - extruding the extrusion solution through the extrusion-channel opening so as to form an extruded continuous moulding;
   - conducting the extruded continuous moulding through an air gap having a predetermined air-gap height;
   - accelerating the continuous moulding in the air gap;

   **characterized by** the following method step:

   - controlling the acceleration of the continuous moulding (11), which is averaged essentially over the air-gap height (H), to a value of

$$\bar{a} = \frac{10}{\delta \left[\dfrac{1}{\beta}\right]^{0,3}},$$

   wherein $\beta$ is the ratio of the length (L) to the diameter (D) of the extrusion channel (8) and wherein the value of the control parameter $\delta$ is at least 0.3.

2. A method according to claim 1, **characterized in that** the value of the control parameter $\delta$ is at least 0.6.

3. A method according to claim 2, **characterized in that** the value of the control parameter $\delta$ is at least 1.5.

4. A method according to claim 3, **characterized in that** the value of the control parameter $\delta$ is at least 2.2.

5. A method according to one of the above-mentioned claims, **characterized by** the following method step:

   - controlling the extrusion velocity $v_E$ of the continuous moulding (11) through the extrusion-channel opening (10) in dependence upon the mean acceleration $\bar{a}$.

6. A method according to one of the above-mentioned claims, **characterized by** the following method step:

   - conveying the extruded continuous moulding (11) in a substantially tensile stress-free manner on a conveying means (25) to a draw-off unit (15), said conveying means (25) being arranged after the air gap (12) or a coagulation bath zone (14).

7. A method according to claim 6, **characterized by** the following method step:

   - controlling the conveying speed of the conveying means (25) in dependence upon said mean acceleration a.

8. A method according to one of the preceding claims, **characterized by** the following method step:

- drawing off the extruded continuous moulding (11), when it has passed the air gap (12), by means of a draw-off unit (15) at a drawing-off velocity $v_A$.

9. A method according to claim 8, **characterized by** the following method step:

    - controlling the drawing-off velocity $v_A$ of the draw-off unit (15) in dependence upon the mean acceleration a.

10. A method according to one of the above-mentioned claims, **characterized by** the following method step:

    - controlling the extrusion velocity $v_E$ of the continuous moulding (11) through the extrusion-channel opening (10) and/or the drawing-off velocity $v_A$ of the continuous moulding (11) by the draw-off unit (15) according to the following formula:

    $$v_A^2 - v_E^2 = \gamma \cdot H \cdot \bar{a},$$

    wherein H is the air-gap height and $\gamma$ is a correction factor having a value between 7 and 7.4.

11. A method according to claim 10, **characterized in that** the value of the correction factor $\gamma$ is approx. 7.2.

12. A method according to one of the above-mentioned claims, **characterized by** the following method step:

    - drawing the extruded continuous moulding after its exit from the extrusion-channel opening in the air gap (12) by means of an airflow flowing around the continuous moulding in the direction of extrusion, the flow velocity of the air (13) exceeding the extrusion velocity of the continuous moulding (11).

13. A method according to claim 12, **characterized by** the following method step:

    - controlling the velocity of the air (13) in dependence upon the mean acceleration $\bar{a}$ in the air gap.

14. A method according to one of the preceding claims, **characterized by** the following method step:

    - controlling the heat flow density Q, which is essentially averaged over the air-gap height, to a value of

$$Q = \frac{0{,}004}{\alpha \cdot \left[\dfrac{1}{\beta}\right]^{0{,}3}}$$

    wherein $\beta$ is the ratio of the length to the diameter of the extrusion channel and
    wherein the value of the control parameter $\alpha$ is at least 0.1.

15. A method according to claim 14, **characterized in that** the value of the control parameter $\alpha$ is at least 0.2.

16. A method according to claim 15, **characterized in that** the the value of the control parameter $\alpha$ is at least 0.5.

17. A method according to claim 16, **characterized in that** the value of the control parameter $\alpha$ is at least 1.0.

18. A method according to one of the claims 14 to 17, **characterized by** the following method step:

    - controlling the temperature $T_E$ of the extrusion solution in dependence upon the heat flow density Q.

19. A method according to one of the claims 14 to 18, **characterized by** the following method step:

    - controlling the temperature $T_L$ of the air surrounding the continuous moulding (11) in the air gap (12) in dependence upon the heat flow density Q.

20. A method according to one of the above-mentioned claims, **characterized by** the following method step:

    - controlling a temperature difference $\Delta T = T_E - T_L$ between the temperature $T_E$ of the extrusion solution and the temperature $T_L$ of the air surrounding the continuous moulding (11) in the air gap (12) to a value of:

$$\Delta T = \frac{H}{d} \cdot \frac{0{,}004}{\dot{m} \cdot c_E \cdot \alpha \cdot \left[\dfrac{1}{\beta}\right]^{0{,}3}}$$

wherein $\dot{m}$ is the mass flow of the extrusion solution through the extrusion-channel opening in g/s, $c_E$ is the specific heat capacity of the extrusion solution in $W/mm^3$, d is the hole density of the holes provided on the nozzle disk in $hole/mm^2$ and H is the length of the air gap in mm.

21. A method according to one of the claims 14 to 20, **characterized in that** the temperature $T_L$ is controlled while the temperature $T_E$ is kept substantially constant.

22. A method according to one of the claims 14 to 20, **characterized in that** the temperature $T_E$ is controlled while the temperature $T_L$ is kept substantially constant.

23. A method according to one of the above-mentioned claims, **characterized in that** the value $\beta$ is at least 2.

24. A method according to claim 21, **characterized in that** the value $\beta$ is at most 150.

25. A method according to claim 22, **characterized in that** the value $\beta$ is at most 100.

26. A method according to one of the above-mentioned claims, **characterized in that** the specific heat capacity $c_E$ of the extrusion solution is at least 2.1 J/ (g K).

27. A method according to one of the above-mentioned claims, **characterized in that** the specific heat capacity $c_E$ of the extrusion solution is at least 2.9 J/ (g K).

**Revendications**

1. Procédé pour extruder un corps profilé continu à partir d'une solution d'extrusion, en particulier une solution d'extrusion contenant de cellulose, d'eau et d'oxyde d'amine tertiaire, comprenant les étapes suivantes :

   - passage de la solution d'extrusion dans un conduit d'extrusion d'une longueur et d'un diamètre prédéfinis, jusqu'à une ouverture de conduit d'extrusion ;
   - extrusion de la solution d'extrusion à travers l'ouverture de conduit d'extrusion pour former un corps profilé continu extrudé ;
   - passage du corps profilé continu extrudé dans un entrefer d'une hauteur prédéfinie ;
   - accélération du corps profilé continu dans ledit entrefer ;

**caractérisé par** l'étape suivante :

   - commande de l'accélération du corps profilé continu (11) dont la moyenne est calculée essentiellement sur la hauteur d'entrefer (H), vers une valeur

$$\bar{\alpha} = \frac{10}{\delta[1/\beta]^{0,3}} \, ,$$

   β désignant le rapport de la longueur (L) au diamètre (D) du conduit d'extrusion (8),
   et la valeur du paramètre de commande δ étant d'au moins 0,3.

2. Procédé selon la revendication 1, **caractérisé en ce que** la valeur du paramètre de commande δ est d'au moins 0,6.

3. Procédé selon la revendication 2, **caractérisé en ce que** la valeur du paramètre de commande δ est d'au moins 1,5.

4. Procédé selon la revendication 3, **caractérisé en ce que** la valeur du paramètre de commande δ est d'au moins 2,2.

5. Procédé selon l'une des revendications spécifiées précédemment, **caractérisé par** l'étape suivante :

   - commande de la vitesse d'extrusion $v_E$ du corps profilé continu (11) à travers l'ouverture de conduit: d'extrusion (10) en fonction de l'accélération moyenne $\bar{a}$.

6. Procédé selon l'une des revendications spécifiées précédemment, **caractérisé par** l'étape suivante :

   - acheminement essentiellement sans contrainte de traction du corps profilé continu extrudé (11) sur un convoyeur (25) qui est disposé après l'entrefer (12) ou après une zone de bain de coagulation (14), jusqu'à un dispositif d'évacuation (15).

7. Procédé selon la revendication 6, **caractérisé par** l'étape suivante :

   - commande de la vitesse d'acheminement du convoyeur (25) en fonction de l'accélération moyenne $\bar{a}$.

8. Procédé selon l'une des revendications spécifiées précédemment, **caractérisé par** l'étape suivante :

   - évacuation du corps profilé continu extrudé (11), après la traversée de l'entrefer (12), par un dispositif d'évacuation (15) à une vitesse d'évacuation v$_A$.

9. Procédé selon la revendication 8, **caractérisé par** l'étape suivante :

   - commande de la vitesse d'évacuation v$_A$ du dispositif d'évacuation (15) en fonction de l'accélération moyenne $\bar{a}$.

10. Procédé selon l'une des revendications spécifiées précédemment, **caractérisé par** l'étape suivante :

    - commande de la vitesse d'extrusion v$_E$, du corps profilé continu (11) à travers l'ouverture de conduit d'extrusion (10) et/ou de la vitesse d'évacuation v$_A$ du corps profilé continu (11) par le dispositif d'évacuation (15) selon la formule suivante :

    $$v_A^2 - v_E^2 = \gamma \cdot H \cdot \bar{a},$$

    dans laquelle H désigne la hauteur d'entrefer et un facteur de correction avec une valeur située entre 7 et 7,4.

11. Procédé selon la revendication 10, **caractérisé en ce que** la valeur du facteur de correction est d'enviro n 7,2.

12. Procédé selon l'une des revendications spécifiées précédemment, **caractérisé par** l'étape suivante :

    - étirage du corps profilé continu extrudé après sa sortie de l'ouverture de conduit d'extrusion dans l'entrefer (12) par un écoulement d'air dans le sens d'extrusion autour du corps profilé continu, la vitesse d'écoulement de l'air (13) étant supérieure à la vitesse d'extrusion du corps profilé continu (11).

13. Procédé selon la revendication 12, **caractérisé par** l'étape suivante :

    - commande de la vitesse de l'air (13) en fonction de l'acc l ratio n moyenne dans l'entrefer (12).

14. Procédé selon l'une des revendications spécifiées précédemment, **caractérisé par** l'étape suivante :

    - commande de densité de l'écoulement calorifique Q dont la moyenne est calculée essentiellement sur la hauteur d'entrefer (H), vers une valeur

$$Q = \frac{0,004}{\alpha \cdot [10/\beta]^{0,3}} \, ,$$

   désignant le rapport de la longueur au diamètre du conduit d'extrusion, et la valeur du paramètre de commande $\alpha$ étant d'au moins 0,1.

15. Procédé selon la revendication 14, **caractérisé en ce que** la valeur du paramètre de commande $\alpha$ est d'au moins 0,2.

16. Procédé selon la revendication 15, **caractérisé en ce que** la valeur du paramètre de commande $\alpha$ est d'au moins 0,5.

17. Procédé selon la revendication 16, **caractérisé en ce que** la valeur du paramètre de commande $\alpha$ est d'au moins 1,0.

18. Procédé selon l'une des revendications 14 à 17, **caractérisé par** l'étape suivante :

    - commande de la température T$_E$ de la solution d'extrusion en fonction de la densité de l'écoulement calorifique Q.

19. Procédé selon l'une des revendications 14 à 18, **caractérisé par** l'étape suivante :

    - commande de la température T$_L$ de l'air qui entoure le corps profilé continu (11) dans l'entrefer (12) en fonction de la densité de l'écoulement calorifique Q.

20. Procédé selon l'une des revendications spécifiées précédemment, **caractérisé par** l'étape suivante :

    - commande d'une différence de température $\Delta T = T_E - T_L$, entre la température T$_E$ de la solution d'extrusion et la température T$_L$ de l'air qui entoure le corps profilé continu (11) dans l'entrefer (12) vers une valeur :

    $$\Delta T = \frac{H}{d} \cdot \frac{0,004}{\dot{m} \cdot c_E \cdot \alpha \cdot [1/\beta]^{0,3}}$$

    $\dot{m}$ désignant le débit massique de la solution d'extrusion à travers l'ouverture de conduite d'extrusion en g/s, c$_E$ la capacité thermique spécifique de la solution d'extrusion en W/mm$^3$, d la densité de trous des perçages prévus sur la plaque de filière en trou/mm$^2$, et H la longueur de l'entrefer en mm.

21. Procédé selon l'une des revendications 14 à 20, **caractérisé en ce que** la température T$_L$ est commandée à une température $T_A$ maintenue essentiellement constante.

22. Procédé selon l'une des revendications 14 à 20, **caractérisé en ce que** la température $T_E$ est commandée à une température $T_L$. maintenue essentiellement constante.

23. Procédé selon l'une des revendications spécifiées précédemment, **caractérisé en ce que** la valeur β est d'au moins 2.

24. Procédé selon la revendication 21, **caractérisé en ce que** la valeur β est au maximum de 150.

25. Procédé selon la revendication 22, **caractérisé en ce que** la valeur β est au maximum de 100.

26. Procédé selon l'une des revendications spécifiées précédemment, **caractérisé en ce que** la capacité thermique spécifique $c_E$ de la solution d'extrusion est d'au moins 2,1 J/(gK).

27. Procédé selon l'une des revendications spécifiées précédemment, **caractérisé en ce que** la capacité thermique spécifique $c_E$ de la solution d'extrusion est au maximum de 2,9 J/(gK).

FIG. 1

EP 1 285 107 B1